# EUROPEAN PATENT SPECIFICATION

(11) **EP 4 246 711 B1**
(45) Date of publication and mention of the grant of the patent: **04.11.2026**
(21) Application number: 23188112.9
(22) Date of filing: 26.11.2019
(51) Int. Cl.: H05B 3/84, H05B 3/10, H05B 3/86, G01S 13/931, G01S 7/40, H01Q 1/02

(54) **TRANSPARENT HEATING ELEMENT, HEATING ELEMENT WITH COVER, SENSOR DEVICE, AND MOBILE OBJECT**
TRANSPARENTES HEIZELEMENT, HEIZELEMENT MIT ABDECKUNG, SENSORVORRICHTUNG UND MOBILES OBJEKT
ÉLÉMENT CHAUFFANT TRANSPARENT, ÉLÉMENT CHAUFFANT AVEC COUVERCLE, DISPOSITIF DE CAPTEUR ET OBJET MOBILE

(30) Priority: 26.11.2018 JP 2018220599
(43) Date of publication of application: 20.09.2023
(62) Document number(s) of the earlier application(s) in accordance with Art. 76 EPC: 19889480.0 / 3 890 434
(73) Proprietor: DAI NIPPON PRINTING CO., LTD., Tokyo-to 162-8001 (JP)
(72) Inventor: HIRATA, Kenro, Tokyo-to 162-8001 (JP); GOISHIHARA, Satoshi, Tokyo-to 162-8001 (JP); ABE, Makoto, Tokyo-to 162-8001 (JP); HIRAKAWA, Manabu, Tokyo-to 162-8001 (JP)
(74) Representative: Müller-Boré & Partner Patentanwälte PartG mbB

(56) References cited:
- WO-A1-2017/204291
- JP-A- 2010 251 230
- KR-A- 20160 040 763
- KR-Y1- 200 425 284
- US-A1- 2020 316 917

## Description

### Technical Field

The present invention relates to a heating element with cover comprising a transparent heating element to be disposed to face a sensor and a sensor device comprising the heating element with cover. A mobile object comprising the transparent heating element, the heating element with cover, or the sensor device, is further described.

### Background Art

Sensors for observing external conditions, such as cameras installed outdoors and radars mounted on mobile objects, are widely used. Such a sensor functions by receiving light or radio waves from outside. For example, a collision prevention system installed on an automobile or the like transmits radio waves (millimeter waves) to the outside and receives the radio waves reflected from outside by a radar, to predict a collision between an external obstacle and the automobile. The collision prevention system can take safety measures to prevent the collision automatically.

A member, such as a cover for protecting the sensor or a decorative member for improving a design property, is sometimes disposed to face the sensor. Such a member is configured to allow light and radio waves to pass therethrough in order not to interfere with the sensor function. For example, as shown in JP2010-100006, in the collision prevention system, an emblem for an automobile having a design property is disposed to face a collision prevention system. This emblem makes the collision prevention system invisible from outside, so as to improve the design property of the automobile. Such an emblem is configured to be capable of transmitting radio waves.

If a large amount of snow and/or water droplets get on a surface of the member disposed to face the sensor, the sensor possibly cannot receive light or radio waves because they are blocked by the snow and/or water droplets and cannot transmit therethrough. Thus, it was considered to dispose a heating element to face the sensor in order to remove snow and water droplets. When a heating conductor is energized, the heating element generates heat by resistance heating. The heat of the heating element transfers to the surface of the member disposed to face the sensor. Thus, snow and water droplets can be removed.

When a member to be disposed to face a sensor is a small member such as a camera cover or an automobile emblem, a heating element to be disposed to face the sensor is also small. It is difficult to dispose a heating conductor in a narrow area at an appropriate resistance value. Thus, a heating element may not generate heat appropriately, resulting in shortage of heating value. In this case, the heating element fails to remove snow and water droplets on a surface of the member disposed to face a sensor.
WO 2017/204291 A1 describes a laminated glass that is provided with a rectangular first glass plate having a first side and a second side facing the first side, a second glass plate disposed facing the first glass plate and having substantially the same shape as the first glass plate, an intermediate film disposed between the first glass plate and the second glass plate, a first bus bar extending along an end section on the first side; a second bus bar extending along an end section on the second side, and a plurality of heating wires extending to connect the first bus bar and the second bus bar. At least some of the plurality of heating wires are constituted by heating wires having different lengths.

### Disclosure Of The Invention

The present invention has been made in view of these circumstances. The object of the present invention is to provide a transparent heating element to be disposed to face a sensor, wherein a resistance value of a heating conductor can be appropriately adjusted.

The object of the present invention is solved by the subject-matter having the features of the independent claims. Additional embodiments are defined in the dependent claims.

According to the present invention, in a transparent heating element to be disposed to face a sensor, a resistance value of a heating conductor can be appropriately adjusted.

### Brief Description of The Drawings

Fig. 1 is a view for describing an embodiment according to the present invention, which is a perspective view schematically showing a mobile object comprising a transparent heating element. In particular, Fig. 1 schematically shows, as an example of the mobile object, an automobile comprising an emblem and the transparent heating element to be disposed to face the emblem.
Fig. 2 is a view of the transparent heating element and the emblem seen from a normal direction of its plate plane.
Fig. 3 is a cross-sectional view of the transparent heating element along a III-III line of Fig. 2.
Fig. 3A is a cross-sectional view of a heating element with cover along the III-III line of Fig. 2.
Fig. 4 is a plan view of the transparent heating element seen from a normal direction of its sheet plane, showing an example of a heating conductor.
Fig. 5 is a plan view of the transparent heating element seen from the normal direction of its sheet plane, showing a first modification example of the heating conductor.
Fig. 6 is a plan view of the transparent heating element seen from the normal direction of its sheet plane, showing a second modification example of the heating conductor.
Fig. 7 is a plan view of the transparent heating element seen from the normal direction of its sheet plane, showing a third modification example of the heating conductor.
Fig. 8 is a plan view of the transparent heating element seen from the normal direction of its sheet plane, showing another example of the third modification example of the heating conductor.
Fig. 9 is a partially enlarged view of a coupling conductor in the other example of the third modification example of the heating conductor of Fig. 8.
Fig. 10 is a plan view of the transparent heating element seen from the normal direction of its sheet plane, showing a fourth modification example of the heating conductor.
Fig. 10A is a plan view of a further modification example of the transparent heating element shown in Fig. 10.
Fig. 11 is a plan view of the transparent heating element seen from the normal direction of its sheet plane, showing yet another modification example of the heating conductor.
Fig. 12 is a plan view of the transparent heating element seen from the normal direction of its sheet plane, showing a modification example of a bus bar that is useful for better understanding present invention.
Fig. 12A is a plan view of the transparent heating element seen from the normal direction of its sheet plane, showing another modification example of the bus bar.

### Mode for Carrying out the Invention

An embodiment of the present disclosure is described in detail below, with reference to the drawings. In the drawings attached to the specification, a scale dimension, an aspect ratio and so on are changed and exaggerated from the actual ones, for the convenience of easiness in illustration and understanding.

In the specification and the drawings, terms meaning a substance that forms basis of a composition, such as "plate", "sheet" and "film", are not differentiated from one another based only on the difference of terms. For example, "sheet with conductor" is a concept including a member that can be referred to as plate or film. Thus, "sheet with conductor" cannot be differentiated from "plate with conductor" and "film with conductor" based only on the difference of terms.

In addition, the term "sheet plane (plate plane, film plane)" means a plane corresponding to a plane direction of a sheet-shaped (plate-shaped, film-shaped) member as a target, when the sheet-shaped (plate-shaped, film-shaped) member as a target is seen as a whole in general.

In addition, terms used in the specification for specifying shapes, geometric conditions and their degrees, e.g., "parallel", "orthogonal", "same", etc., and values of a length and an angle are not limited to their strict definitions, but construed to include a range capable of exerting a similar function.

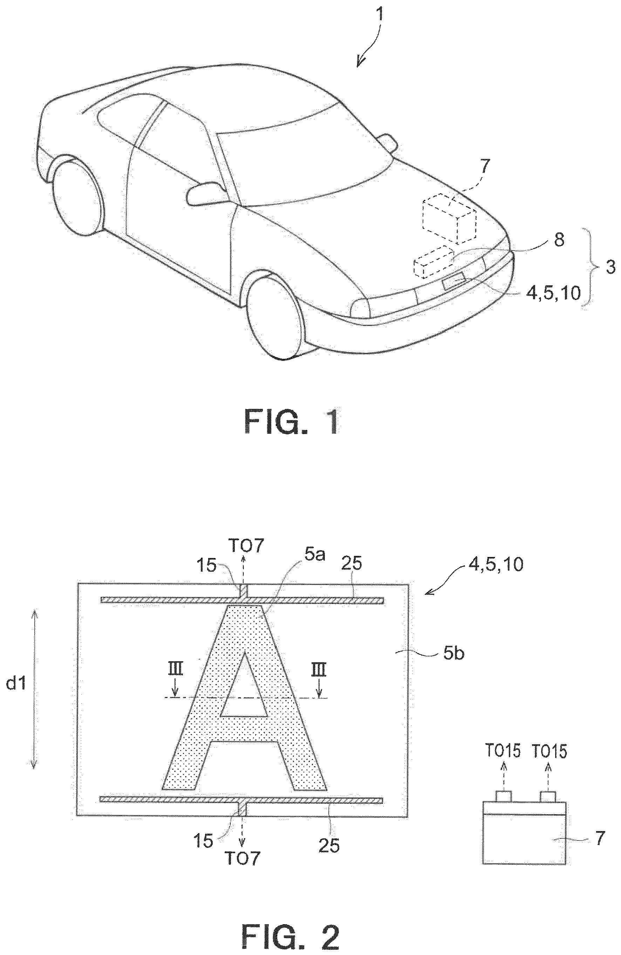

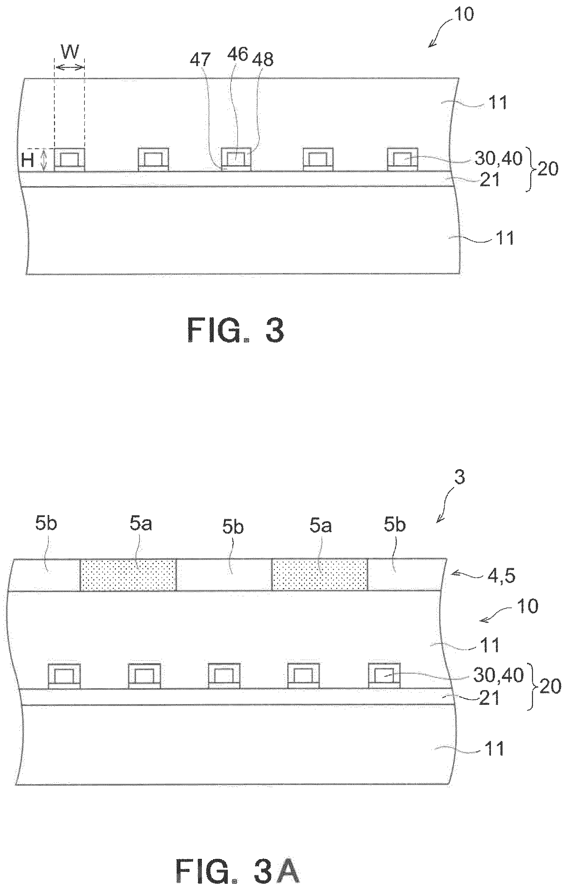

Figs. 1 to 12 are views for describing an embodiment according to the present invention and modification examples. Fig. 1 is a view schematically showing an automobile comprising a transparent heating element. Fig. 2 is a view of the transparent heating element seen from a normal direction of its plate plane. Fig. 3 is a sectional view of the transparent heating element along a III-III line of Fig. 2.

As shown in Fig. 1, the automobile as an example of a mobile object 1 comprises a sensor device 2. The sensor device 2 has a sensor 8, and a heating element with cover 3 disposed to face the sensor 8. The heating element with cover 3 has a cover 4, and a transparent heating element 10 provided on the cover 4. Such a cover 4 protects the sensor 8 from outside. The cover 4 may have a design property. The cover 4 is an emblem 5 that may give a design property to the mobile object 1. Namely, in the illustrated example, the automobile as an example of the mobile object 1 has the sensor 8, the emblem 5 and the transparent heating element 10 which are disposed to face the sensor 8. The sensor 8 may be, for example, a radar of a collision preventing system. In the illustrated example, the transparent heating member 10 is provide on the emblem 5. The transparent heating element 10 is a small member having substantially the same size as that of the emblem 5 of the automobile. For example, the transparent heating element 10 is a plate-shaped member of a rectangular shape having a side length of 50 mm or more and 250 mm or less in a plan view. The automobile also has a power source 7 such as a battery.

The emblem 5 includes a first area 5a and a second area 5b. The first area 5a is an area that displays a logo mark or the like by a character or a symbol in the emblem 5. The first area 5a has a glossy color such as a silver color. The second area 5b is an area that serves as a background of the logo mark in the emblem 5. The second area 5b has a dark color such as a black color. Thus, a reflectance of the first area 5a is higher than a reflectance of the second area 5b. However, not limited to this example, the logo mark may be displayed by the dark-colored second area 5b, and the glossy-colored first area 5a may serve as a background of the logo mark.

Fig. 2 shows the transparent heating element 10 provided on the emblem 5, seen from a normal direction of its plate plane. Fig. 2 shows the emblem 5 having an "A" shape, for example. In the illustrated example, an area forming the character "A" is the glossy-colored first area 5a, while an area other than the area forming the character "A" is the dark-colored second area 5b. Fig. 3 is a sectional view of the transparent heating element 10 of Fig. 2 along a III-III line. As shown in Fig. 3, the transparent heating element 10 provided on the emblem 5 has a transparent layer 11 made of a resin, a binder, etc., and a sheet with conductor 20 stacked on the transparent layer 11 or embedded in the transparent layer 11. In the illustrated example, the transparent heating element 10 has a flat plate-like shape, but it may have a curved shape. Further, Fig. 3A shows a sectional view of the heating element with cover 3 of Fig. 2 along the III-III line. In the example shown in Fig. 3A, the emblem 5 is bonded to the transparent heating element 10 through the transparent layer 11. In the example of transparent heating element 10 shown in Figs. 3 and 3A, the transparent layer 11 on which a below-described heating conductor 30 of the sheet with conductor 20 is provided, and the transparent layer 11 on which a below-described substrate 21 is provided may have the same structure with the same material, or may be different from each other at least in one of the material and the structure.

The sheet with conductor 20 has the substrate 21, the heating conductor 30 provided on a surface of the substrate 21, and a pair of bus bars 25 for energizing the heating conductor 30. As shown in Fig. 2, the bus bars 25 are preferably disposed only at positions overlapped with the second area 5b of the emblem 5. The heating conductor 30 is preferably disposed such that its density at a position overlapped with the second area 5b is higher than its density at a position overlapped with the first area 5a. More preferably, the heating conductor 30 is disposed only at a overlapped with the second area 5b. Further, in the example shown in Fig. 3A, a side of the heating conductor 30, which is opposed to the substrate 21, faces the emblem 5. In other words, the side of the heating conductor 30, which is opposed to the side facing the emblem 5, i.e., the side of the substrate 21 can be seen from outside.

As well shown in Fig. 2, the transparent heating element 10 has a wiring unit 15 for energizing the heating conductor 30. In the illustrated example, the heating conductor 30 is energized by the power source 7 such as a battery from the wiring unit 15 through the bus bars 25 of the sheet with conductor 20, so that the heating conductor 30 generates heat by resistance heating. The heat generated by the heating conductor 30 transfers to the surface of the transparent heating element 10 to warm the surface of the transparent heating element 10. Thus, snow and water droplets on the surface of the transparent heating element 10 can be removed. As a result, the transparent heating element 10 can remove snow and water droplets interfering with radio waves from a position facing the sensor 8, to enable the sensor 8 to function normally.

The term "transparent" of the transparent heating element 10 means that the transparent heating element 10 has transparency which allows one side of the transparent heating element to be seen from the other side thereof through the transparent heating element. For example, the transparent heating element 10 has a visible light transmittance of 30% or more, more preferably 70% or more. The visible light transmittance is specified as follows. When transmittances are measured at measurement wavelength within a range of from 380 nm to 780 nm by means of a spectrophotometer ("UV-3100PC" manufactured by Shimadzu Corporation, which is a product compliant with JIS K 0115), the visible light transmittance is specified as an average value of the transmittances at the respective wavelengths.

Next, the sheet with conductor 20 is described. The sheet with conductor 20 has substantially the same planar dimensions as those of the transparent heating element 10, and is disposed over the entire transparent heating element 10. Respective constituent elements of the sheet with conductor 20 are described herebelow.

The substrate 21 is a member for supporting the heating conductor 30. The substrate 21 is a transparent electrically insulating film. The substrate 21 may be made of any material that can transmit visible light and can appropriately support the heating conductor 30. For example, materials for the substrate 21 may include polyethylene terephthalate, polyethylene naphthalate, polycarbonate, polystyrene, cyclic polyolefin, etc. The substrate 21 preferably has a thickness of 0.03 mm or more and 0.20 mm or less, in consideration of light transmission, appropriate supportability for heating conductor 30, durability, thermal conductivity, etc.

A pair of bus bars 25 are spaced apart from each other in a first direction d1. Each of the pair of bus bars 25 is electrically connected to the corresponding wiring unit 15. A voltage of the power source 7 connected to the wiring units 15 is applied to the pair of bus bars 25. In the example shown in Fig. 2, the bus bars 25 are disposed near an outer peripheral portion of the sheet with conductor 20.

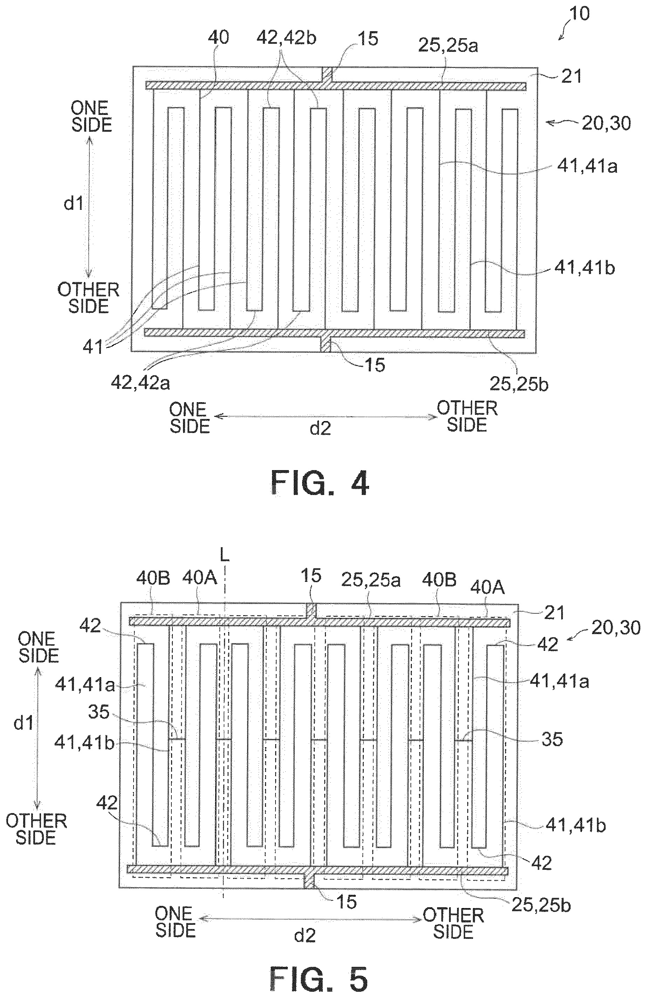

Next, the heating conductor 30 is described with reference to Fig. 4. Fig. 4 is a plan view of the sheet with conductor 20 seen from a normal direction of its sheet plane.

The heating conductor 30 is disposed to couple the pair of bus bars 25 and electrically connects the pair of bus bars 25. When a voltage is applied to the heating conductor 30 through the wiring units 15 and the bus bars 25, the heating conductor 30 generates heat by resistance heating. Then, the heat transfers to the surface of the transparent heating element 10 to heat the surface of the transparent heating element 10.

The heating conductor 30 has a plurality of coupling conductors 40. Each of the coupling conductors 40 couples the pair of bus bars 25. The coupling conductors 40 extend in the first direction d1 as a whole, and are arranged in a second direction d2 which is not parallel to the first direction d1. In the illustrated example, each bus bar extends in the second direction d2. The first direction d1 and the second direction d2 are orthogonal to each other.

A specific structure of the coupling conductor 40 shown in Fig. 4 is described in detail later.

Examples of a material for forming the bus bars 25 and the coupling conductors 40 of the heating conductor 30 may include a metal such as gold, silver, copper, platinum, aluminum, chromium, molybdenum, nickel, titanium, palladium, indium, tungsten, etc., and one or more alloys containing one or more of these metals. The heating conductor 30 and the bus bar 25 may be formed of the same material, or of materials different from each other.

The heating conductor 30 may be formed of an opaque metal material as described above. On the other hand, a ratio of an area on the substrate 21, which is not covered with the heating conductor 30, i.e., a non-coverage factor is as high as about 70% or more and 99% or less. In addition, a line width W of the coupling conductor 40 is 20 µm or less. Thus, the area where the heating conductor 30 is provided looks transparent as a whole. Namely, the presence of the heating conductor 30 does not impair the transparency of the transparent heating element 10.

As described above, the heating conductor 30 is preferably disposed such that its density at a position overlapped with the second area 5b is higher than its density at a position overlapped with the first area 5a. In other words, the non-coverage factor of the coupling conductors 40 in the first area 5a is preferably higher than the non-coverage factor of the coupling conductors 40 in the second area 5b. More preferably, the heating conductor 30 is disposed only at a position overlapped with the second area 5b. In other words, it is preferable that the first area 5a is not covered with the coupling conductor 40, i.e., no coupling conductor 40 is disposed on the first area 5a. When the non-converge factor of the coupling conductor 40 in the first area 5a is high, or more preferably when no coupling conductor 40 is disposed on the first area 5a, the design property of the emblem 5 can be less impaired by the coupling conductor 40. Similarly, when the non-converge factor of the bus bar 25 in the first area 5a is high, or more preferably when no bus bar 25 is disposed on the first area 5a, the design property of the emblem 5 can be less impaired by the coupling conductor 40.

In the example shown in Fig. 3, the coupling conductor 40 has a rectangular sectional shape as a whole. It is preferable that the width W of the coupling conductor 40, i.e., the width W along the plate plane of the transparent heating element 10 is 2 µm or more and 20 µm or less, and that a height (thickness) H thereof, i.e., the height (thickness) H along a direction normal to the plate plane of the transparent heating element 10 is 1 µm or more and 60 µm or less. Since the coupling conductor 40 having such dimensions is sufficiently narrow, the heating conductor 30 can be made effectively invisible.

In addition, as shown in Fig. 3, the coupling conductor 40 may include a conductive metal layer 46, a first dark-colored layer 47, and a second dark-colored layer 48. The first dark-colored layer 47 covers a surface of the conductive metal layer 46, which faces the substrate 21. The second dark-colored layer 48 covers a surface of the conductive metal layer 46, which is opposed to the surface facing the substrate 21, and both side surfaces of the conductive metal layer 46. The conductive metal layer 46 made of a metal material having an excellent conductivity has relatively a high reflectance. When light is reflected by the conductive metal layer 46 forming the coupling conductor 40 of the heating conductor 30, the reflected light can be seen. This may impair the design property of the emblem 5 on which the transparent heating element 10 is provided. For this reason, the first and second dark-colored layers 47, 48 cover at least partially the surfaces of the conductive metal layer 46. The first and second dark-colored layers 47, 48 may be any layers which have a visible light reflectance lower than that of the conductive metal layer 46. For example, the dark-colored layers 47, 48 may be layers having a dark color such as a low-brightness achromatic color such as black or dark gray, or a dark color such as a low-brightness chromatic color such as brown, dark blue, dark green, dark purple, or dark red. In addition, as a material of the dark-colored layer, black iron oxide (Fe₃O₄), carbon, copper oxide (copper oxide (II) CuO), copper nitride, copper nitride oxide, copper-cobalt alloy, etc. may be used. The dark-colored layers 47, 48 make the conductive metal layer 46 more invisible, and thus can prevent lowering of the design property of the emblem 5 on which the transparent heating element 10 is provided when seen from outside.

In the example shown in Fig. 3A, the side of the heating conductor 30, which is opposed to the substrate 21, faces the emblem 5. In other words, the side of the heating conductor 30, which is opposed to the side thereof facing the emblem 5, i.e., the side of the substrate 21 can be seen from outside. Thus, in order to prevent lowering of the design property of the emblem 5 on which the transparent heating element 10 when seen from outside, the coupling conductor 40 preferably includes the dark-colored layer 47 at least on the side opposed to the side facing the emblem 5 (cover 4). In addition, the bus bar 25 preferably includes a dark-colored layer. Namely, in order to prevent lowering of the design property of the emblem 5 on which the transparent heating element 10 when seen from outside, the bus bar 25 preferably includes a dark-colored layer at least on the side opposed to the side facing the emblem 5 (cover 4).

As described above, the transparent heating element 10 in this embodiment has a size similar to that of the emblem 5 in order to be provided on the emblem 5 of an automobile. Namely, the transparent heating element 10 is a member smaller than a conventional transparent heating element used as an automobile windshield glass or the like. When the transparent heating element 10 is small, it is difficult for the heating conductor 30 to have an appropriate resistance value, which may result in shortage of resistance heating of the transparent heating element 10. In order to increase the resistance heating, a resistance value of the heating conductor 30 needs to be increased. In order to increase the resistance value of the heating conductor 30, it has been proposed to reduce a sectional shape of the coupling conductor 40, i.e., to reduce the width W of the coupling conductor 40. However, the excessively narrowed width W of the coupling conductor 40 may lower the strength of the coupling conductor 40. In this case, the coupling conductor 40 may be disconnected, when the transparent heating element 10 is subject to impact. Thus, the mere adjustment of the width W of the coupling conductor 40 does not readily enable achieving a resistance value required for the heating conductor 30.

In this embodiment, as shown in Fig. 4, in order that the heating conductor 30 can have a desired resistance value, the coupling conductor 40 is folded back at least twice in the first direction d1. Namely, between the bus bar 25 on one side of the first direction d1 and the bus bar 25 on the other side thereof, the coupling conductor 40 includes at least a portion that extends from the one side to the other side in the first direction d1, then extends from the other side to the one side in the first direction d1, and again extends from the one side to the other side in the first direction d1.

A path length of such a coupling conductor 40 can be lengthened by adjusting positions at which it is folded back and the number of folding, whereby a resistance value of the heating conductor 30 can be increased. The path length of the coupling conductor 40 means a length (total length) along the coupling conductor 40 from the one bus bar 25 to the other bus bar 25. A resistance value of the heating conductor 30 can be appropriately adjusted to a desired value by adjusting the path length of the coupling conductor 40. An appropriate resistance value enables the transparent heating element 10 to appropriately generate heat.

In order that the coupling conductor 40 is folded back at least twice in the first direction d1, one coupling conductor 40 includes at least three linear portions 41, and a connection portion 42 connecting the two linear portions 41. The linear portion 41 extends in the first direction d1 along which the pair of bus bars are spaced apart from each other. Namely, the linear portion 41 has a length along at least the first direction d1. A plurality of the linear portions 41 are arranged in the second direction d2.

In such a coupling conductor 40, one of linear portions 41 which are connected by a certain connection portion 42 extends from the connection portion 42 to the one side of the first direction d1 to connect to one of the bus bars 25 directly or indirectly through another connection portion 42 and another linear portion 41. The other of the linear portions 41 connected by the connection portion 42 extends from the connection portion 42 to the one side of the first direction d1 to connect to the other of the bus bars 25 directly or indirectly through another connection portion 42 and another linear portion 41. In the example shown in Fig. 4, two linear portions 41 connected by a connection portion 42a extend to the one side of the first direction d1 to respectively connect to the bus bars 25a, 25b separated from each other. In other words, the coupling conductor 40 coupling the pair of bus bars 25 is folded back at the connection portion 42 to the one side of the first direction d1. Similarly, one of the linear portions 41, which are connected by a connection portion 42 different from said connection portion 42, extends from the former connection portion 42 to the other side of the first direction d1 to connect to the other of the bus bars 25 directly or indirectly through another connection portion 42 and another linear portion 41. The other of the linear portions 41, which are connected by the connection portion 42, extends from the connection portion 42 to the other side of the first direction d1 to connect to the other of the bus bars 25 directly or indirectly through another connection portion 42 and another linear portion 41. In the example shown in Fig. 4, two linear portions 41 connected by a connection portion 42b extend to the other side of the first direction d1 to respectively connect to the bus bars 25a, 25b separated from each other. In other words, the coupling conductor 40 coupling the pair of bus bars 25 is folded back at a certain connection portion 42 to the other side of the first direction d1. In this manner, the coupling conductor 40 is folded back at least twice at connection portions 42a, 42b in the first direction d1.

Particularly in the example shown in Fig. 4, the connection portion 42 of the coupling conductor 40 connects the linear portions 41 that are adjacent to each other in the second direction d2. Each linear portion 41 and the connection portion 42 connect to each other at their ends. Further, in each coupling conductor 40, a linear portion 41a of the linear portions 41, which is disposed nearest to the one side of the second direction d2, connects to the bus bar 25a disposed on one side of the first direction d1, and a linear portion 41b, which is disposed nearest to the other side of the second direction d2, connects to the bus bar 25b disposed on the other side of the first direction d1. When the coupling conductor 40 is configured as shown in Fig. 4, a plurality of the coupling conductors 40 can be folded back in a simple manner. Namely, the path length of the coupling conductor 40 can be adjusted in a simple manner, so that a resistance value of the heating conductor 30 can be appropriately adjusted.

The coupling conductor 40 shown in Fig. 4 can be variously modified. Modification examples of the coupling conductor 40 shown in Figs. 5 to 11 are respectively described herebelow. Note that modification to the coupling conductor 40 is not limited to the respective below modification examples.

### (First Modification Example of Coupling Conductor)

Fig. 5 shows a first modification example of the coupling conductor 40. In the first modification example, a plurality of coupling conductors 40 include a first group of coupling conductors 40A and a second group of coupling conductors 40B. Particularly in the illustrated example, the coupling conductors 40 are classified into any of the first group of coupling conductors 40A and the second group of coupling conductors 40B. In the first group of coupling conductors 40A, similarly to the coupling conductors 40 shown in Fig. 4, a linear portion 41a of the coupling conductor 40, which is disposed nearest to the one side of the second direction d2, connects to the bus bar 25a disposed on the one side of the first direction d1, and a linear portion 41b, which is disposed nearest to the other side of the second direction d2, connects to the bus bar 25b disposed on the other side of the first direction d1. On the other hand, in the second group of coupling conductors 40B, reversely to the coupling conductors 40 shown in Fig. 4, a linear portion 41a of the coupling conductor 40, which is disposed nearest nearest to the one side of the second direction d2, connects to the bus bar 25b disposed on the other side of the first direction d1, and a linear portion 41b, which is disposed nearest to the other side of the second direction d2, connects to the bus bar 25a disposed on the one side of the first direction d1.

In the first modification example, the heating conductor 30 further has a connecting conductor 35 that connects two coupling conductors 40 adjacent to each other. The two adjacent coupling conductors 40 are electrically connected to each other by the connecting conductor 35. Thus, if disconnection occurs in a part from one end of the coupling conductor 40 to a point connected to the connecting conductor 35 by an impact or the like from outside, a part from the other end of the coupling conductor 40 to the point connected to the connecting conductor 35 connects to another coupling conductor 40 via the coupling conductor 35. As a result, heat generated in the part from the other end of the coupling conductor 40 to the point connected to the connecting conductor 35 can be maintained.

In the first modification example, the first group of coupling conductors 40A and the second group of coupling conductors 40B are alternately disposed in the second direction d2. Thus, the connecting conductor 35 connects one of the first group of coupling conductors 40A and one of the second group of coupling conductors 40B to each other.

Further, it is preferable that a ratio of a resistance value of a part of one coupling conductor 40 connected by the connecting conductor 35, the part extending from a point connected to the connecting conductor 35 to a point connected to the bus bar 25b disposed on the other side of the first direction d1, with respect to a resistance value of a part thereof, the part extending from a point connected to the bus bar 25a disposed on the one side of the first direction d1 to a point connected to the connecting conductor 35, is equal to a ratio of a resistance value of a part of the other coupling conductors 40 connected by the coupling conductor 35, the part extending from a point connected to the connecting conductor 35 to a point connected to the bus bar 25b disposed on the other side of the first direction d1, with respect to a resistance value of a part thereof, the part extending from a point connected to the bus bar 25a disposed on one side of the first direction d1 to a point connected to the connecting conductor 35. When the connecting conductor 35 is provided to satisfy the relationship related to the resistance value ratio, almost no current flows through the connecting conductor 35 when there is no disconnection. Thus, due to the provision of the connecting conductor 35, the current flowing through the first group of coupling conductors 40A and the second group of coupling conductors 40B is unchanged. Thus, the first group of coupling conductors 40A and the second group of coupling conductors 40B can respectively generate intended heat.

In particular, the relationship related to the resistance value ratio can be easily satisfied when the two coupling conductors 40 connected by the connecting conductor 35 are line-symmetric with each other, with respect to a certain straight line passing through the connecting conductor 35. In the first modification example shown in Fig. 5, the two coupling conductors 40 connected by the connecting conductor 35 are line-symmetric with each other, with respect to a straight line L which extends in a direction parallel to the first direction d1 to pass through the center of the connecting conductor 35 in the second direction d2.

The aforementioned description in which the two resistance value ratios are equal to each other not only means that the two resistance value ratios take strictly the same value, but also includes a case in which the two resistance value ratios are different from each other to the extent that a current is allowed to flow through the connecting conductor 35 as long as the first group of the coupling conductors 40A and the second group of coupling conductors 40B can sufficiently generate intended heat, respectively. Specifically in this embodiment, when one of the two resistance value ratios is within 10% of the other, it can be considered that the two resistance value ratios are equal to each other.

### (Second Modification Example of Coupling Conductor)

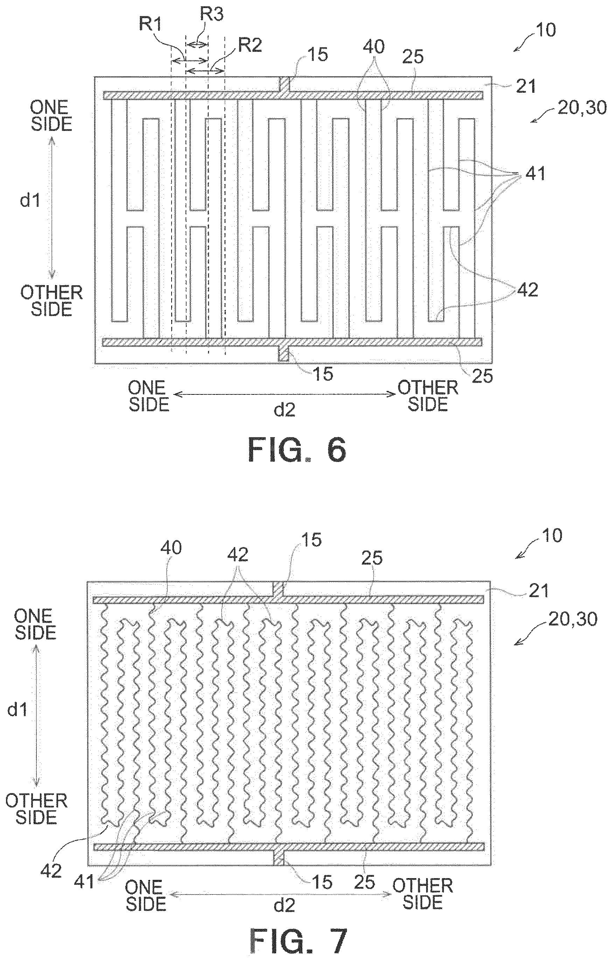

Fig. 6 shows a second modification example of the coupling conductor 40. In the example of the coupling conductor 40 shown in Fig. 6, an area in which one coupling conductor 40 is disposed in the second direction d2, and an area in which another coupling conductor 40 is disposed in the second direction d2 are different areas that do not overlap each other. On the other hand, in the second modification example, an area in which one coupling conductor 40 is disposed in the second direction d2, and an area in which another coupling conductor 40 is disposed in the second direction d2 partially overlap each other. To be specific, as shown in Fig. 6, an area R1 in which a coupling conductor 40a is disposed in the second direction d2, and an area R2 in which a coupling conductor 40b, which is adjacent to the coupling conductor 40a, is disposed in the second direction d2 partially overlap each other in an area R3.

In the illustrated example, the coupling conductor 40 is folded back at a given position between the pair of bus bars 25, e.g., at a position near the center, in order to adjust the path length. According to this example, the path length of the coupling conductor 40 can be easily adjusted to a length other than a length that is approximately odd-number times of the length between the pair of bus bars 25. Because of such a coupling conductor 40, a large area in which no coupling conductor 40 is left in the heating conductor 30, when an area in which a certain coupling conductor 40 is disposed in the second direction d2, and an area in which another coupling conductor 40 is disposed in the second direction d2 are areas different from each other. Since the area in which no coupling conductor 40 is disposed generates no heat, non-uniform heat generation undesirably occurs between the area in which a coupling conductor 40 is disposed and the area in which no coupling conductor 40 is disposed.

On the other hand, according to the second modification example of the coupling conductor 40, even when the coupling conductor 40 is folded back at a given position between the pair of bus bars 25, e.g., at a position near the center, another coupling conductor 40 is disposed at a position facing the folded position. Thus, even when the coupling conductor 40 is folded back at a given position between the pair of bus bars 25 in order to adjust the path length, an area in which no coupling conductor 40 is disposed can be reduced. Thus, non-uniform heat generation can be suppressed in the transparent heating element 10 as a whole, and thus the entire transparent heating element 10 can uniformly generate heat. In addition, since the heating conductor 30 is distributed uniformly, the heating conductor 30 can be made difficult to see.

### (Third Modification Example of Coupling Conductor)

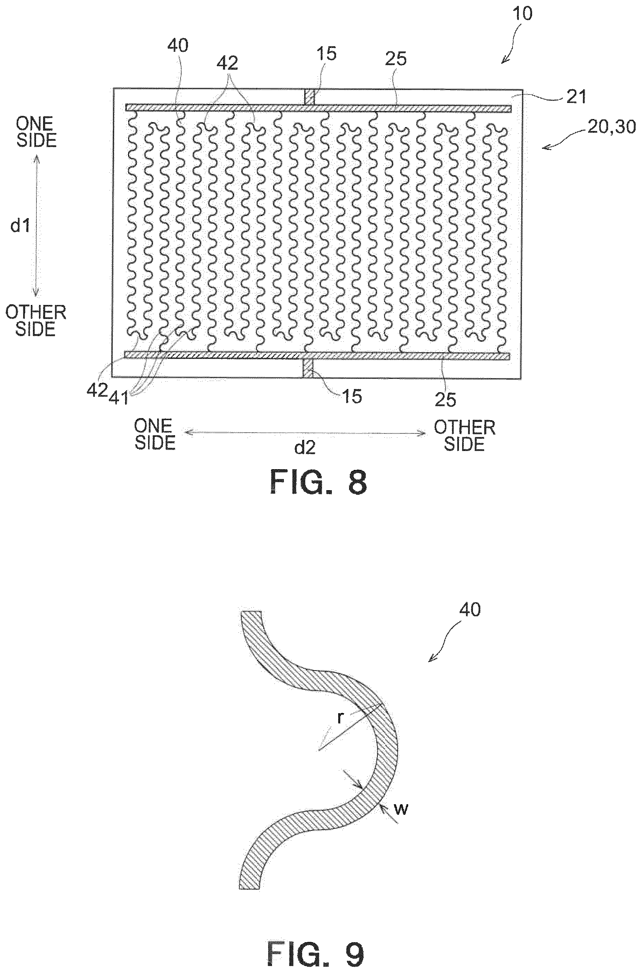

Figs. 7 and 8 shows a third modification example of the coupling conductor 40. In an example of the third modification example shown in Fig. 7, the coupling conductor 40 has a wavy shape that is a combination of curved lines. However, not limited thereto, the coupling conductor 40 may have a straight line shape as in another example, may have a polygonal shape that is a combination of straight lines, or may have a curved line shape. Alternatively, the coupling conductor 40 may have a shape that is a combination of these shapes. In particular, as in another example of the third modification example shown in Fig. 8, the coupling conductor 40 may have a shape in which arcs are combined. In the example shown in Fig. 8, the coupling conductor 40 has a shape in which 180° arcs of the same size are combined such that adjacent arcs are opposed to each other.

Since the coupling conductor 40 has a straight line shape, a curved line shape, or a shape in which a straight line and the curved line are combined, the path length of the coupling conductor 40 can be suitably adjusted without changing the general shape of the coupling conductor 40. In addition, when the transparent heating element 10 is press-molded in a below-described step of installing the transparent heating element 10 on the emblem 5, if the transparent heating element 10 is deformed in a direction along which the coupling conductor 40 extends, the coupling conductor 40 is less likely to be cut.

The general shape of the coupling conductor means an overall form of the coupling conductor 40 that is defined by lengths of each linear portion 41 and each connection portion 42, and their directions along which they extend.

Fig. 9 is a partially enlarged view of the coupling conductor 40 shown in Fig. 8. When the coupling conductor 40 has a shape in which arcs are combined, a radius r of one arc forming the shape of the coupling conductor 40 shown in Fig. 9 and a width W of the coupling conductor 40 satisfy the following relationship. $0.6 \leq {\left(r-W\right)}^{2} / {r}^{2} \leq 0.95$ Namely, a non-coverage factor of one coupling conductor 40 is 60% or more and 95% or less. When such a relationship is satisfied, the coupling conductor 40 having a shape in which arcs are combined does not look thick and thus can be difficult to see. As a specific example, when the radius r of the arc is 0.145 mm, and the width W of the coupling conductor 40 is 0.02 mm, the non-coverage factor of the coupling conductor 40 is 74%. The radius r of the arc refers to a length from a center of the arc forming the coupling conductor 40 to an outer edge of the coupling conductor 40.

### (Fourth Modification Example of Coupling Conductor)

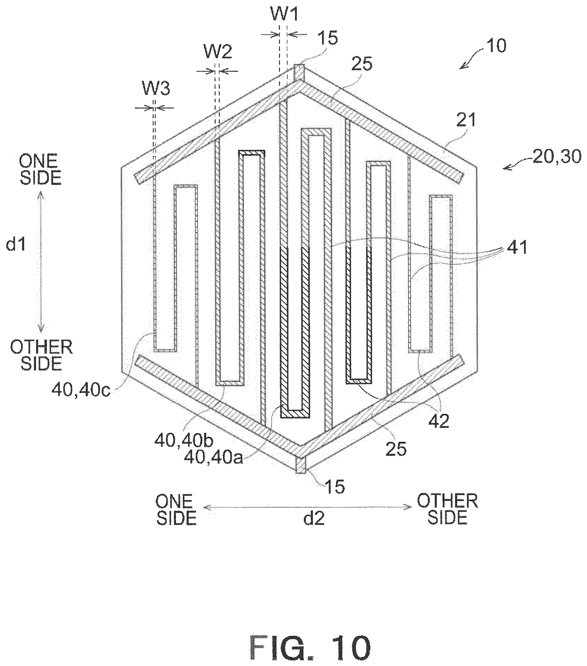

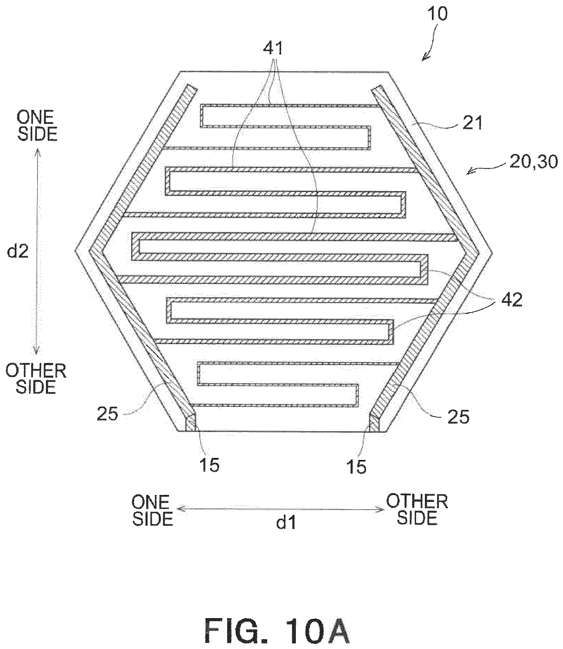

Fig. 10 shows a fourth modification example of the coupling conductor 40. In the example shown in Fig. 10, the transparent heating element 10 has a hexagonal shape as a whole. The pair of bus bars 25 have a shape formed by lines. Namely, each bus bar 25 extends in a direction which is not parallel to the direction d2 along which the coupling conductors 40 are arranged. Thus, a distance between the pair of bus bars 25 in the first direction d1 is not constant at each position in the second direction d2. Thus, a plurality of the coupling conductors 40 coupling the pair of bus bars 25 have path lengths different from one another.

In the fourth modification example, a width W of a certain coupling conductor 40 is wider than a width W of another coupling conductor 40 whose path length is shorter than that of the former coupling conductor 40. In the example shown in Fig. 10, a path length of a coupling conductor 40a is longer than a path length of a coupling conductor 40b, and the path length of the coupling conductor 40b is longer than a path length of a coupling conductor 40c. In addition, a width W1 of the coupling conductor 40a is wider than a width W2 of the coupling conductor 40b, and the width W2 of the coupling conductor 40b is wider than a width W3 of the coupling conductor 40c.

A resistance value of the coupling conductor 40 is proportional to the path length of the coupling conductor 40, and is inversely proportional to the width W of the coupling conductor 40. Thus, by making wider the width W of a certain coupling conductor 40 than the width W of another coupling conductor 40 whose path length is shorter than the path length of the former coupling conductor 40, resistance values of the respective coupling conductors 40 can be made uniform. In particular, when a value obtained by dividing the width W of the coupling conductor 40 by the square of the path length is constant, heat generated per unit area can be made uniform in each coupling conductor 40. Thus, the transparent heating element 10 can uniformly generate heat entirely.

### (Other Modification Examples of Coupling Conductor)

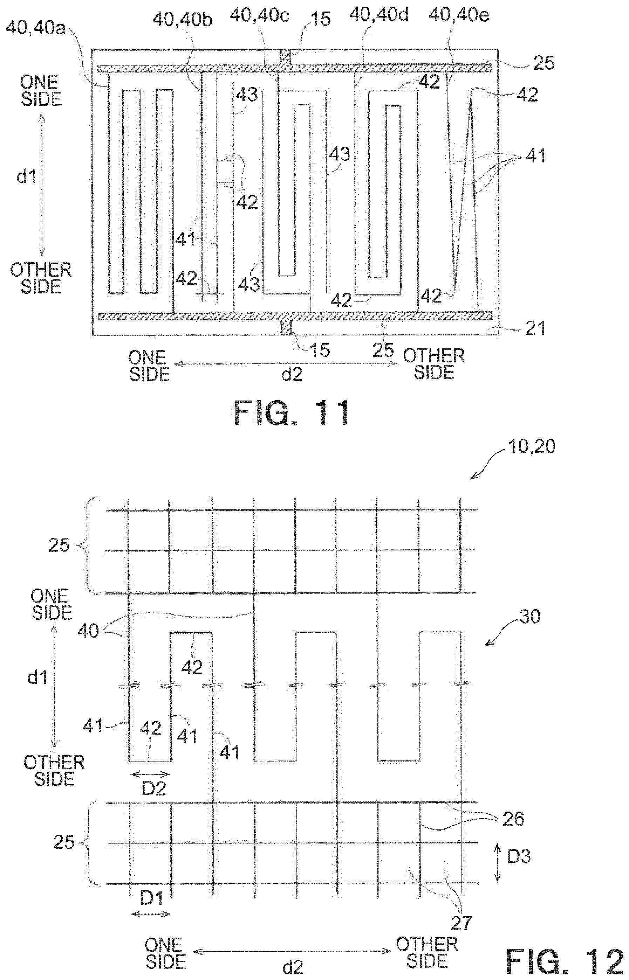

The coupling conductor 40 included in the transparent heating element 10 in this embodiment is not limited to the examples shown in Figs. 4 to 10, and may be structured as coupling conductors 40a to 40e shown in Fig. 11. for example.

For example, in the examples shown in Figs. 4 to 10, the coupling conductor 40 is folded back twice. However, as shown in the coupling conductor 40a shown in Fig. 11, the coupling conductor 40 may be folded back three times or more. The path length of the coupling conductor 40 can be adjusted by the number of folding the coupling conductor 40, so as to appropriately adjust a resistance value of the coupling conductor 40.

In addition, in the examples shown in Figs. 4 to 10, the end of the linear portion 41 and the end of the connection portion 42 are connected to each other. However, as shown in the coupling conductor 40b shown in Fig. 41, a given point of the linear portion 41 and a given point of the connection portion 42 may be connected to each other. Namely, the linear portion 41 and the connection portion 42 may extend from a point where they are connected to each other. For example, the linear portion 41 and the connection portion 42 may intersect with each other. Since a part extending from a point where the linear portion 41 and the connection portion 42 are connected to each other is not electrically connected to the pair of bus bars 25, the part serves as a dummy portion 43 which does not contribute to heat generation of the transparent heating element 10. The distribution of the heating conductor 30 can be made uniform by suitably providing such a dummy portion 43. The uniformed distribution of the heating conductor 30 can make it difficult to see the heating conductor 30, which improves the design property of the transparent heating element 10.

In addition, in the examples shown in Figs. 4 to 10, two linear portions 41 in one coupling conductor 40 are connected to each other by only one connection portion 42. However, as shown in the coupling conductor 40b shown in Fig. 11, two linear portions 41 may be connected to each other by a plurality of connection portions 42. In this case, the electrical connection of the coupling conductor 40 can be maintained, even when one of connection portions 42 is disconnected.

Further, in the examples shown in Figs. 4 to 10, only one linear portion 41 in one coupling conductor 41 connects to one of bus bars 25. However, as shown in the coupling conductor 40b show in Fig. 11, a plurality of linear portions 41 in one coupling conductor 40 may connect to one of bus bars 25. In this case, the electrical connection of the coupling conductor 40 can be maintained, even when one of the linear portions 41 connected to the bus bar 25 is disconnected.

In addition, the aforementioned dummy portion 43 is not limited to a part that extends from a point where the linear portion 41 and the connection portion 42 are connected to each other, but may be a certain linear portion 41 and a certain connection portion 42 as a whole, as in the coupling conductor 40c shown in Fig. 11.

Further, in the examples shown in Figs. 4 to 10, a linear portion 41 of linear portions 41 of each coupling conductor 40, which is disposed nearest to the one side of the second direction d2, connects to one of bus bars 25. However, as in the coupling conductor 40c shown in Fig. 11, a linear portion 41, which is other than the linear portion disposed nearest to the one side of the second direction d2, may connect to the one of bus bars 25.

In addition, in the examples shown in Figs. 4 to 10, the connection portion 42 connects two linear portions 41 adjacent to each other in the second direction d2. However, as in the coupling conductor 40d shown in Fig. 11, two linear portions 41 connected by the connection portion 42 may not be adjacent to each other in the second direction d2.

Further, in the examples shown in Figs. 4 to 10, "a linear portion 41 extending in the first direction d1" extends parallel to the first direction d1. However, it is sufficient for the linear portion 41 to be present in an area along the first direction d1. Thus, the linear portion 41 may extend parallel to a direction that is inclined with respect to the first direction d1. In other words, it is sufficient for the linear portion 41 to include at least a component extending in the first direction d1. Namely, as in a linear portion 41 included in the coupling conductor 40e shown in Fig. 11, the linear portion 41 may be inclined with respect to the first direction d1.

In addition, in the examples shown in Figs. 4 to 10, the linear portion 42 extends linearly. However, as in a connection portion 42 of the coupling conductor 40e shown in Fig. 11, the connection portion 42 may be a point with which the linear portion 41 is in contact.

Further, in the example shown in Fig. 5, one of the first group of coupling conductors 40A and one of the second group of coupling conductors 40B are alternately disposed. However, some of the first group of coupling conductors 40A and some of the second group of coupling conductors 40B may be disposed alternately. For example, two of the first group of coupling conductors 40A and two of the second group of coupling conductors 40B may be disposed alternately. In this case, one of the first group of coupling conductors 40A and one of the second group of coupling conductors 40B, which are adjacent to each other in the second direction d2, may be connected to each other by the connecting conductor 35. Further, in the example shown in Fig. 5, the adjacent two coupling conductors 40 are connected to each other by one coupling conductor 35, but the adjacent two coupling conductors 40 may be connected to each other by a plurality of coupling conductors 35.

It goes without saying that the coupling conductor 40 can have the aforementioned exemplary structures in combination.

Next, an example of a manufacturing method of the transparent heating element 10 is described.

First, a dark-colored film to form the first dark-colored layer 47 is provided on the substrate 21.

Then, a metal film to form the conductive metal layer 46 is provided on the dark-colored layer. The metal film can be formed by a known method. For example, a method of attaching a metal foil such as copper foil, a plating method including electroplating and electroless plating, a sputtering method, a CVD method, a PVD method, an ion plating method, or a method including two or more of them in combination can be adopted.

Thereafter, a resist pattern is provided on the metal film. The resist pattern has a shape corresponding to the heating conductor 30 to be formed. This resist pattern can be formed by patterning using a known photolithography technique.

Then, the metal film and the dark-colored film are etched using the resist pattern as a mask. The metal film and the dark-colored film are patterned in substantially the same pattern as the resist pattern by this etching. As a result, the conductive metal layer 46 to form a part of the coupling conductor 40 is formed from the patterned metal film. In addition, the first dark-colored layer 47 to form a part of the coupling conductor 40 is formed from the patterned dark-colored layer.

The etching method is not particularly limited, and a known method can be adopted. Known methods include, for example, wet etching using an etching solution, a plasma etching, and so on. After that, the resist pattern is removed.

Thereafter, the second dark-colored layer 48 is formed on a surface of the conductive metal layer 46, which is opposed to the surface on which the first dark-colored layer 47 has been provided, and side surfaces thereof. The second dark-colored layer 48 can be formed by subjecting a part of the material forming the conductive metal layer 46 to a darkening treatment (blackening treatment). Thus, the second dark-colored layer 48 made of metal oxide or metal sulfide is obtained from the part forming the conductive metal layer 46. Alternatively, the dark-colored layer 48 may be provided on a surface of the conductive metal layer 46. Alternatively, the second dark-colored layer 48 may be provided by roughening the surface of the conductive metal layer 46.

Due to the above steps, the heating conductor 30 is formed on the substrate 21, so that the sheet with conductor 20 can be produced.

Finally, the transparent heating element 10 is formed such that the sheet with conductor 20 is embedded therein. Thus, the transparent heating element 10 shown in Fig. 3 can be produced. The transparent heating element 10 is provided on the emblem 5 by press-molding it onto the emblem 5.

As described above, the transparent heating element 10 in this embodiment is disposed to face the sensor 8, and comprises the pair of bus bars 25 separated from each other in the first direction d1, and the heating conductor 30 coupling the pair of bus bars 25, wherein the heating conductor 30 has a plurality of the coupling conductors 40 each coupling the pair of bus bars 25, the coupling conductors 40 are arranged in the second direction d2 not parallel to the first direction d1, and the coupling conductor 40 is folded at least twice in the first direction d1. According to such a transparent heating element 10, the path length of the coupling conductor 40 can be adjusted by adjusting a position at which the coupling conductor 40 is folded back and the number thereof. In the transparent heating element 10 disposed to face the sensor 8, a resistance value of the heating conductor 30 can be appropriately adjusted by adjusting the path length of he coupling conductor 40. Since the heating conductor 30 has a desired resistance value, the transparent heating element 10 can appropriately generate heat.

The aforementioned embodiment can be variously modified. Hereafter, modified examples are described with reference to the drawings. In the below description and the drawings used in the below description, a part that can be similarly constituted to the above embodiment has the same symbol as that of corresponding part the above embodiment, and overlapped description is omitted.

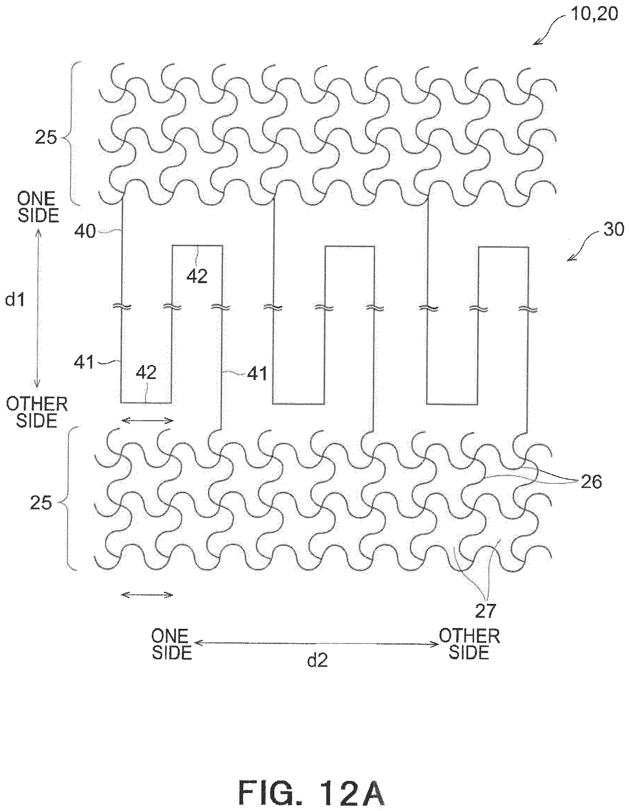

In the aforementioned embodiment, the pair of bus bars 25 has an elongate plate-like shape. However, as shown in Fig. 12, at least one of the bus bars 25 may be formed by disposing linear conductors 26 in a mesh pattern with a plurality of opening 27. The bus bar 25 having such a structure can be made more transparent.

In particular, it is preferable that at least one of a length D1 of the opening 27 of the bus bar 25 in the second direction D2 and a length D3 thereof in the first direction d1 is the same as a distance D2 between two linear portions 41 of the coupling conductor 4, which are adjacent to each other in the second direction d2. In this case, it is difficult to visually distinguish the bus bar 25 and the coupling conductor 40 from each other. Thus, the bus bar 25 can be less noticeable.

In addition, a width of the linear conductor 26 may be the same as a width of the coupling conductor 40 of the heating conductor 30, or may be different therefrom. The width of the linear conductor 26 is preferably 3 µm or more and 50 µm or less. Since the linear conductor 26 having such dimensions is sufficiently narrow, the bus bar 25 can be made effectively invisible.

Alternatively, the width of the linear conductor 26 is preferably larger than the width of the coupling conductor 40 of the heating conductor 30. To be specific, the width of the linear conductor 26 is preferably twice or more, more preferably three times or more, the width of the coupling conductor 40 of the heating conductor 30. The width of such a linear conductor 26 is 10 µm or more and 80 µm or less, for example.

In addition, a sectional area of the linear conductor 26 is preferably larger than a sectional area of the heating conductor 30. To be specific, the sectional area of the linear conductor 26 is preferably twice or more, more preferably three times or more, the sectional area of the coupling conductor 40 of the heating conductor 30. The sectional area of such a linear conductor 26 is 10 µm² or more and 4800 µm² or less, for example.

In particular, when the transparent heating element 10 is a small member, the bus bar 25 may be disposed in a narrow area. When the bus bar 25 is formed by disposing the linear conductors 26 in a mesh pattern, the linear conductors 26 in such an narrow area has a higher density. In this case, the bus bar 25 may generate more heat than that of the heating conductor 30. Since an area in which the heating conductor 30 is disposed is an area which should generate heat in the transparent heating conductor 10, it is undesirable that the bus bar 25 generates more heat than the that of the heating conductor 30. In order to prevent this, as described above, the width of the linear conductor 26 is made larger than the width of the coupling conductor 40. Thus, the resistance of the bus bar 25 can be made lower than the resistance of the heating conductor 30. In addition, as described above, the sectional area of the linear conductor 26 is made larger than the sectional area of the heating conductor 30. Thus, the resistance of the bus bar 25 can be made lower than the resistance of the heating conductor 30. As a result, an area which should generate heat in the transparent heating element 10 can efficiently generate heat.

In the example shown in Fig. 12, the bus bar 25 is formed by linear conductors 26 that extend in the first direction d1 and are arranged in the second direction d2, and the linear conductors 26 that extend in the second direction d1 and are arranged in the first direction d1. Further, the length D1 of the opening 27 of the bus bar 25 in the second direction d2 and the distance D2 between the two linear portions 41 of the coupling conductor 4, which are adjacent to each other in the second direction d2, are the same in the second direction d2. In this case, it is difficult to visually distinguish the bus bar 25 and the coupling conductor 40 from each other. Thus, the bus bar 25 can be less noticeable.

Herein, the above description in which at least one of the length D1 of the opening 27 of the bus bar 25 in the second direction D2 and the length D3 thereof in the first direction d1 is the same as the distance D2 between the two linear portions 41 of the coupling conductor 4, which are adjacent to each other in the second direction d2, are the same not only means that they are strictly the same length, but also includes a case in which they are different from each other to the extent that the presence of the coupling conductor 40 makes the bus bar 25 unnoticeable. Specifically in this embodiment, when one of the lengths is within 10% of the other, it can be considered that they are the same with each other, because the bus bar 25 is sufficiently unnoticeable.

In addition, similarly to the coupling conductor 40 shown in Fig. 7, the linear conductor 26 in the bus bar 25 may have a curved line shape, or a shape in which a straight line and the curved line are combined. In particular, similarly to the coupling conductor 40 shown in Fig. 8, the linear conductor 26 may have a shape in which arcs are combined, as shown in Fig. 12A. In this case, in the step of press-molding the transparent heating element 10 on the emblem 5, the linear conductor 26 having such a shape is less likely to be cut even when the transparent heating element 10 is deformed. In particular, since the bus bar 25 is disposed nearer to the periphery of the transparent heating element 10 than the heating conductor 30, the bus bar 25 is more likely to be deformed in the manufacturing step of the transparent heating element 10, whereby the linear conductor 26 is more likely to be cut. Thus, when the linear conductor 26 has a shape in which curved lines or arcs are combined, an effect of making it difficult for the linear conductor 26 to be cut can be more remarkably obtained.

When the linear conductor 26 has a shape in which arcs are combined, similarly to the coupling conductor 40 shown in Fig. 9, a radius r of one arc forming the shape of the linear conductor 26 and a width W of the linear conductor 26 satisfy the following relationship. $0.6 \leq {\left(r-W\right)}^{2} / {r}^{2} \leq 0.95$ Namely, a non-coverage factor of one linear conductor 26 is 60% or more and 95% or less. When such a relationship is satisfied, the linear conductor 26 having a shape in which arcs are combined does not look thick and thus can be difficult to see.

Further, in the illustrated example of the transparent heating element 10, the first direction d1 is a longitudinal direction and the second direction d2 is a transverse direction. However, it does not mean that the transparent heating element 10 is disposed such that the first direction d1 is a vertical direction and that the second direction d2 is a horizontal direction. The transparent heating element 10 may be disposed such that the first direction d1 is the vertical direction and that the second direction d2 is the horizontal direction, or such that the first direction d1 is the horizontal direction and that the second direction d2 is the vertical direction. Moreover, both the first direction d1 and the second direction d2 are directions that are inclined with respect to the horizontal direction and also with respect to the vertical direction.

When the first direction d1 along which the bus bars 25 are spaced apart from each other is the horizontal direction or substantially the horizontal direction, the wiring unit 15 connected to the bus bar 25 preferably extends downward in the vertical direction of the bus bar 25, as shown in Fig. 10A. The wiring unit 15 extending downward the bus bar 25 is difficult to see because the emblem 5 is often disposed below an observer. Thus, the design property of the emblem 5 on which the transparent heating element 10 is disposed is less damaged.

In addition, in the aforementioned embodiment, the transparent heating element 10 is provided on the emblem 5 facing a radar of a collision prevention system of the mobile object 1. However, the transparent heating element 10 may be disposed to face another sensor 8 of the mobile object 1. For example, the transparent heating element 10 may be disposed to face a camera provided on the mobile object 1.

Moreover, the transparent heating element 10 may be disposed to face a sensor provided on an exterior wall of a building, for example, in addition to the mobile object 1.

Although some modification examples to the aforementioned embodiment have been described above, it goes without saying that some modification examples can be suitably combined and applied.

- 1: Mobile object
- 2: Sensor device
- 3: Heating element with cover
- 4: Cover
- 5: Emblem
- 5a: First area
- 5b: Second area
- 7: Power source
- 8: Sensor
- 10: Transparent heating element
- 11: Transparent layer
- 15: Wiring unit
- 20: Sheet with conductor
- 21: Substrate
- 25: Bus bar
- 26: Linear conductor
- 27: Opening
- 30: Heating conductor
- 35: Connecting conductor
- 40: Coupling conductor
- 40A: First group of coupling conductors
- 40B: Second group of coupling conductors
- 41: Linear portion
- 42: Connection portion
- 43: Dummy portion
- 46: Conductive metal layer
- 47: First dark-colored layer
- 48: Second dark-colored layer

## Claims

1. A heating element (3) with a cover (4) comprising:
a transparent heating element (10) provided on the cover (4);
wherein:
the transparent heating element (10) is disposed to face a sensor (8), the transparent heating element (10) comprising a pair of bus bars (25) spaced apart from each other in a first direction (d1) and a plurality of coupling conductors (40) coupling the pair of bus bars (25);
wherein:
the coupling conductors (40) are arranged in a second direction (d2) not parallel to the first direction (d1); and
the coupling conductor (40) is folded back at least twice in the first direction (d1);
each coupling conductor (40) includes at least three linear portions (41) that extend in the first direction (d1) and are arranged in the second direction (d2), and a connection portion (42) that connects two of the linear portions (41);
the connection portion (42) connects two of the linear portions (41) adjacent to each other in the second direction (d2);
**characterized in that** the cover (4) is an emblem(5);
the bus bar (25) is formed in a mesh pattern with a plurality of openings (27);
the mesh pattern is formed by disposing a plurality of linear conductors (26); and
the linear conductor (26) has a curved line shape, a shape in which a straight line and a curve line are combined, or a shape in which arcs are combined.

2. The heating element (3) with cover according to claim 1, wherein:
a length of the opening in the second direction (d2) is the same as a distance between two of the linear portions (41) adjacent to each other in the second direction (d2).

3. The heating element (3) with cover according to claim 1 or 2, wherein:
a width of the linear conductor (26) is larger than a width of the coupling conductor (40).

4. The heating element (3) with cover according to any one of claims 1 to 3, wherein:
a sectional area of the linear conductor (26) is larger than a sectional area of the coupling conductor (40).

5. The heating element (3) with cover according to any one of claims 1 to 4, wherein:
the cover (4) includes a first area (5a), and a second area (5b) whose reflectance is lower than that of the first area (5a);
the pair of bus bars (25) of the transparent heating element (10) are disposed only at positions overlapped with the second area (5b); and
each of the pair of bus bars (25) includes a dark-colored layer on a side opposed to a side facing the cover (4).

6. The heating element (3) with cover according to any one of claims 1 to 4, wherein:
the cover (4) includes a first area (5a), and a second area (5b) whose reflectance is lower than that of the first area (5a);
a non-coverage factor of the coupling conductors (40) in the first area (5a) is higher than a non-coverage factor of the coupling conductors (40) in the second area (5b); and
the coupling conductor (40) includes a dark-colored layer on a side opposed to a side facing the cover (4).

7. The heating element with cover according to claim 6, wherein
the coupling conductors (40) of the transparent heating element (10) are disposed only at positions overlapped with the second area (5b).

8. A sensor device comprising:
a sensor (8); and
a heating element (3) with cover according to any one of claims 1 to 7, disposed to face the sensor (8);
wherein the sensor (8) is disposed to face the transparent heating element (10) of the heating element (3) with cover.

## Patentansprüche

1. Heizelement (3) mit einer Abdeckung (4), umfassend:
ein transparentes Heizelement (10), das auf der Abdeckung (4) bereitgestellt ist;
wobei:
das transparente Heizelement (10) angeordnet ist, um einem Sensor (8) zugewandt zu sein, das transparente Heizelement (10) umfassend ein Paar Sammelschienen (25), die in einer ersten Richtung (d1) voneinander beabstandet sind, und eine Vielzahl von Kopplungsleitern (40), die das Paar Sammelschienen (25) miteinander koppeln;
wobei:
die Kopplungsleiter (40) in einer zu der ersten Richtung (d1) nicht parallelen zweiten Richtung (d2) eingerichtet sind; und
der Kopplungsleiter (40) mindestens zweimal in der ersten Richtung (d1) zurückgefaltet ist;
jeder Kopplungsleiter (40) mindestens drei lineare Abschnitte (41), die sich in der ersten Richtung (d1) erstrecken und in der zweiten Richtung (d2) eingerichtet sind, und einen Verbindungsabschnitt (42), der zwei der linearen Abschnitte (41) verbindet, einschließt;
der Verbindungsabschnitt (42) zwei der in der zweiten Richtung (d2) aneinander angrenzenden linearen Abschnitte (41) verbindet;
**dadurch gekennzeichnet, dass** die Abdeckung (4) ein Emblem (5) ist;
die Sammelschiene (25) in einem Maschenmuster mit einer Vielzahl von Öffnungen (27) ausgebildet ist;
das Maschenmuster durch Anordnen einer Vielzahl von linearen Leitern (26) ausgebildet ist; und
der lineare Leiter (26) eine gekrümmte Linienform, eine Form, in der eine gerade Linie und eine gekrümmte Linie kombiniert sind, oder eine Form, in der Bögen kombiniert sind, aufweist.

2. Heizelement (3) mit Abdeckung nach Anspruch 1, wobei:
eine Länge der Öffnung in der zweiten Richtung (d2) dieselbe wie ein Abstand zwischen zwei der linearen Abschnitte (41), die in der zweiten Richtung (d2) aneinander angrenzen, ist.

3. Heizelement (3) mit Abdeckung nach Anspruch 1 oder 2, wobei:
eine Breite des linearen Leiters (26) größer als eine Breite des Kopplungsleiters (40) ist.

4. Heizelement (3) mit Abdeckung nach einem der Ansprüche 1 bis 3, wobei:
ein Querschnittsbereich des linearen Leiters (26) größer als ein Querschnittsbereich des Kopplungsleiters (40) ist.

5. Heizelement (3) mit Abdeckung nach einem der Ansprüche 1 bis 4, wobei:
die Abdeckung (4) einen ersten Bereich (5a) und einen zweiten Bereich (5b), dessen Reflexionsgrad niedriger als der des ersten Bereichs (5a) ist, einschließt;
das Paar Sammelschienen (25) des transparenten Heizelements (10) nur an Positionen angeordnet ist, die mit dem zweiten Bereich (5b) überlappen; und
jede des Paars von Sammelschienen (25) eine dunkelfarbige Schicht auf einer Seite, die einer der Abdeckung (4) zugewandten Seite gegenüberliegt, einschließt.

6. Heizelement (3) mit Abdeckung nach einem der Ansprüche 1 bis 4, wobei:
die Abdeckung (4) einen ersten Bereich (5a) und einen zweiten Bereich (5b), dessen Reflexionsgrad niedriger als der des ersten Bereichs (5a) ist, einschließt;
ein Nichtabdeckungsfaktor der Kopplungsleiter (40) in dem ersten Bereich (5a) höher als ein Nichtabdeckungsfaktor der Kopplungsleiter (40) in dem zweiten Bereich (5b) ist; und
der Kopplungsleiter (40) eine dunkelfarbige Schicht auf einer Seite, die einer der Abdeckung (4) zugewandten Seite gegenüberliegt, einschließt.

7. Heizelement mit Abdeckung nach Anspruch 6, wobei
die Kopplungsleiter (40) des transparenten Heizelements (10) nur an Positionen angeordnet sind, die mit dem zweiten Bereich (5b) überlappen.

8. Sensorvorrichtung, umfassend:
einen Sensor (8); und
ein Heizelement (3) mit Abdeckung nach einem der Ansprüche 1 bis 7, das angeordnet ist, um dem Sensor (8) zugewandt zu sein;
wobei der Sensor (8) angeordnet ist, um dem transparenten Heizelement (10) des Heizelements (3) mit Abdeckung zugewandt zu sein.

## Revendications

1. Élément chauffant (3) muni d'un couvercle (4) comprenant :
un élément chauffant transparent (10) prévu sur le couvercle (4) ;
dans lequel :
l'élément chauffant transparent (10) est disposé pour faire face à un capteur (8), l'élément chauffant transparent (10) comprenant une paire de barres omnibus (25) espacées l'une de l'autre dans une première direction (d1) et une pluralité de conducteurs de couplage (40) couplant la paire de barres omnibus (25) ;
dans lequel :
les conducteurs de couplage (40) sont agencés dans une seconde direction (d2) non parallèle à la première direction (d1) ; et
le conducteur de couplage (40) est replié au moins deux fois dans la première direction (d1) ;
chaque conducteur de couplage (40) comporte au moins trois portions linéaires (41) qui s'étendent dans la première direction (d1) et sont agencées dans la seconde direction (d2), et une portion de connexion (42) qui connecte deux des portions linéaires (41) ;
la portion de connexion (42) connecte deux des portions linéaires (41) adjacentes l'une à l'autre dans la seconde direction (d2) ;
**caractérisé en ce que** le couvercle (4) est un emblème (5) ;
la barre omnibus (25) est formée selon un motif en treillis muni d'une pluralité d'ouvertures (27) ;
le motif en treillis est formé par la disposition d'une pluralité de conducteurs linéaires (26) ; et
le conducteur linéaire (26) présente une forme de ligne courbe, une forme dans laquelle une ligne droite et une ligne courbe sont combinées, ou une forme dans laquelle des arcs sont combinés.

2. Élément chauffant (3) muni d'un couvercle selon la revendication 1, dans lequel :
une longueur de l'ouverture dans la seconde direction (d2) est la même qu'une distance entre deux des portions linéaires (41) adjacentes l'une à l'autre dans la seconde direction (d2).

3. Élément chauffant (3) muni d'un couvercle selon la revendication 1 ou 2, dans lequel :
une largeur du conducteur linéaire (26) est supérieure à une largeur du conducteur de couplage (40).

4. Élément chauffant (3) muni d'un couvercle selon l'une quelconque des revendications 1 à 3, dans lequel :
une section du conducteur linéaire (26) est supérieure à une section du conducteur de couplage (40).

5. Élément chauffant (3) muni d'un couvercle selon l'une quelconque des revendications 1 à 4, dans lequel :
le couvercle (4) comporte une première zone (5a), et une seconde zone (5b) dont la réflectance est inférieure à celle de la première zone (5a) ;
la paire de barres omnibus (25) de l'élément chauffant transparent (10) sont disposées uniquement au niveau de positions chevauchant la seconde zone (5b) ; et
chacune de la paire de barres omnibus (25) comporte une couche de couleur sombre sur un côté opposé à un côté faisant face au couvercle (4).

6. Élément chauffant (3) muni d'un couvercle selon l'une quelconque des revendications 1 à 4, dans lequel :
le couvercle (4) comporte une première zone (5a), et une seconde zone (5b) dont la réflectance est inférieure à celle de la première zone (5a) ;
un facteur de non-recouvrement des conducteurs de couplage (40) dans la première zone (5a) est supérieur à un facteur de non-recouvrement des conducteurs de couplage (40) dans la seconde zone (5b) ; et
le conducteur de couplage (40) comporte une couche de couleur sombre sur un côté opposé à un côté faisant face au couvercle (4).

7. Élément chauffant muni d'un couvercle selon la revendication 6, dans lequel
les conducteurs de couplage (40) de l'élément chauffant transparent (10) sont disposés uniquement au niveau de positions chevauchant la seconde zone (5b).

8. Dispositif de capteur comprenant :
un capteur (8) ; et
un élément chauffant (3) muni d'un couvercle selon l'une quelconque des revendications 1 à 7, disposé pour faire face au capteur (8) ;
dans lequel le capteur (8) est disposé pour faire face à l'élément chauffant transparent (10) de l'élément chauffant (3) muni d'un couvercle.
